# FASCICULE DE BREVET EUROPEEN

(11) **EP 4 543 717 B1**
(45) Date de publication et mention de la délivrance du brevet: **11.02.2026**
(21) Numéro de dépôt: 23731648.4
(22) Date de dépôt: 08.06.2023
(51) Int. Cl.: B60T 7/10, B60T 11/04, B62K 23/06

(54) **DISPOSITIF DE FREINAGE COMPRENANT UN ORGANE DE GUIDAGE**
BREMSVORRICHTUNG MIT EINEM FÜHRUNGSELEMENT
BRAKING DEVICE COMPRISING A GUIDE MEMBER

(30) Priorité: 22.06.2022 FR 2206192
(43) Date de publication de la demande: 30.04.2025
(73) Titulaire: Decathlon, 59650 Villeneuve d'Ascq (FR)
(72) Inventeur: SCHÄFER, Florent, 59650 VILLENEUVE D'ASCQ (FR); MABIRE, Simon, 59650 VILLENEUVE D'ASCQ (FR)
(74) Mandataire: Cabinet Beau de Loménie
(86) Numéro de dépôt international: PCT/EP2023/065339
(87) Numéro de publication internationale: WO 2023/247197

(56) Documents cités:
- EP-A1- 2 594 469
- DE-A1- 102013 217 056
- JP-A- 2007 030 584
- US-A1- 2013 192 941

## Description

### Domaine Technique

La présente invention concerne le domaine technique des véhicules, en particulier les véhicules à roues et notamment les cycles, par exemple les vélos.

Elle concerne plus précisément un dispositif de freinage pour un tel véhicule à roues comportant un guidon et un câble de frein ayant une partie de fixation au guidon. Le dispositif de freinage permet de réaliser le freinage du véhicule lorsqu'il est actionné.

### Technique antérieure

On connait des dispositifs de freinage comportant :
- un support présentant une première partie configurée pour être fixée à un guidon via un élément de fixation, ainsi qu'une seconde partie et une partie coudée située entre les première et seconde parties;
- un corps pivotant monté à la partie coudée du support de manière pivotante autour d'un axe de pivotement qui est sensiblement parallèle à l'axe longitudinal de l'élément de fixation ; et
- un organe de guidage de l'entrée du câble de frein dans le support monté à la seconde partie du support.

Le document EP2594469 B1 décrit un tel dispositif de freinage, équipant des vélos pour enfants. Ce dispositif permet notamment aux enfants ayant de petites mains de saisir le levier de freinage et d'appliquer aisément la force nécessaire au freinage.

En revanche, lorsque le dispositif de freinage est monté sur un véhicule, par exemple un vélo, l'organe de guidage fait saillie vers l'avant du véhicule. Aussi, l'organe de guidage s'avère encombrant et il est nécessaire d'en limiter les dimensions.

Par ailleurs, ce positionnement de l'organe de guidage implique que le câble de frein s'étend également vers l'avant du dispositif de freinage, ce qui est d'autant plus encombrant. Il existe notamment un risque que le câble de frein gêne l'utilisateur lorsqu'il actionne le levier de freinage. En outre, compte-tenu de l'agencement de l'organe de guidage, le câble de frein décrit en outre une courbure importante entre l'organe de guidage du dispositif de freinage et le frein du véhicule, augmentant les frottements du câble de frein au sein de la gaine et réduisant l'efficacité du freinage.

### Exposé de l'invention

Un but de la présente invention est de proposer un dispositif de freinage remédiant aux inconvénients précités.

Pour ce faire, l'invention porte sur un dispositif de freinage pour un véhicule à roues comportant un guidon et un câble de frein ayant une partie de fixation, ledit dispositif de freinage comportant :
- un support présentant une première partie munie d'un élément de fixation au guidon et une seconde partie, opposée à la première partie, l'élément de fixation s'étendant selon un axe longitudinal; et
- un corps pivotant monté à la seconde partie du support de manière pivotante autour d'un axe de pivotement qui est sensiblement parallèle à l'axe longitudinal de l'élément de fixation, entre au moins une position de repos et une position actionnée, le corps pivotant comprenant un levier de freinage faisant saillie, selon une direction sensiblement parallèle à l'axe longitudinal de l'élément de fixation, depuis une première portion du corps pivotant, le corps pivotant présentant en outre une seconde portion munie d'une zone de réception pour recevoir la partie de fixation du câble de frein, l'axe de pivotement étant disposé entre la première portion et la seconde portion du corps pivotant,
le support comportant en outre un organe de guidage de l'entrée du câble de frein dans le support, ledit organe de guidage présentant un axe de guidage du câble de frein qui est sensiblement perpendiculaire à l'axe de pivotement, l'organe de guidage et la zone de réception s'étendant de part et d'autre d'un plan passant par l'axe de pivotement et par l'axe longitudinal de l'élément de fixation.

L'élément de fixation permet de monter, de préférence de manière amovible, le dispositif de freinage au guidon. De cette manière, le support est maintenu immobile par rapport au guidon. De manière non limitative, ledit élément de fixation peut comprendre un manchon de fixation s'étendant selon ledit axe longitudinal. Ledit élément de fixation forme avantageusement un ensemble monobloc avec le support.

Le guidon comprend avantageusement une poignée de préhension permettant à l'utilisateur de manipuler le guidon et ainsi diriger le véhicule. Ladite poignée préhension s'étend avantageusement selon une direction longitudinale, l'axe longitudinal de l'élément de fixation étant confondu avec ladite direction longitudinale lorsque le dispositif de freinage est monté au guidon.

De préférence, la partie de fixation du câble de frein est située en une première extrémité du câble de frein. De préférence, la partie de fixation comprend une tête de câble.

Le câble de frein est avantageusement disposé à l'intérieur d'une gaine. Le câble de frein traverse l'organe de guidage tandis qu'une extrémité de la gaine est logée dans l'organe de guidage. L'organe de guidage comprend avantageusement un orifice traversant traversé par le câble de frein. L'organe de guidage comprend avantageusement une butée de gaine disposée à l'intérieur de l'organe de guidage, sur laquelle vient en butée ladite gaine. Ladite butée de gaine présente avantageusement une forme oblongue, ce qui limite le risque que de l'eau ne pénètre dans la gaine du câble de frein.

L'organe de guidage comprend avantageusement une molette de réglage de la tension du câble de frein. En plus de guider le câble dans le support, l'organe de guidage permet donc de régler la tension du câble de frein. On limite ainsi le nombre de pièces nécessaires pour réaliser ces fonctions et on limite donc l'encombrement global du dispositif de freinage.

La molette de réglage est avantageusement mobile en translation par rapport au support. Ladite molette de réglage comprend avantageusement un filetage, respectivement un taraudage, tandis que le support présente une portion taraudée, respectivement une portion filetée, la molette de réglage étant configurée pour être vissée sur ladite portion taraudée, respectivement sur ladite portion filetée. Alternativement, et de manière non limitative, une pièce de connexion taraudée, respectivement une pièce de connexion filetée, peut être montée sur le support, ladite molette de réglage étant configurée pour être vissée sur ladite pièce de connexion.

Par ailleurs, l'axe de pivotement du corps pivotant du dispositif de freinage selon l'invention est disposé entre la zone de réception et le levier de freinage. Un intérêt est de former un effet de levier réduisant l'effort à exercer sur ledit levier de freinage pour faire pivoter la zone de réception et tirer sur la partie de fixation du câble de frein.

En position de repos, le levier de freinage est de préférence à distance du guidon. Le corps pivotant ne tire pas sur le câble de frein de sorte que le dispositif de freinage ne réalise pas de freinage.

L'organe de guidage permet de guider l'entrée du câble de frein dans le support. Autrement dit, le câble de frein entre dans le support selon ledit axe de guidage.

De préférence, ledit organe de guidage s'étend selon ledit axe de guidage. L'organe de guidage présente avantageusement la forme d'un manchon.

De préférence, mais de manière non limitative, le support et l'organe de guidage forment un ensemble monobloc. Alternativement, et sans sortir du cadre de l'invention, le support et l'organe de guidage pourraient être deux pièces distinctes solidarisées entre elles.

Lorsque le corps pivotant est en position de repos, l'axe de guidage passe avantageusement par la zone de réception.

Afin de réaliser le freinage de la roue du véhicule, l'utilisateur actionne le levier de freinage, par exemple en pliant les doigts. Le levier de freinage est pivoté autour de l'axe de pivotement et est rapproché du guidon. Le corps pivotant pivote alors autour de l'axe de pivotement ce qui a pour effet de modifier la position de la zone de réception, qui est éloignée de l'organe de guidage. Il s'ensuit qu'un effort de traction est appliqué sur la partie de fixation du câble de frein et plus généralement sur le câble de frein, ce qui conduit au freinage du véhicule.

La zone de réception décrit avantageusement une trajectoire circulaire lorsque le corps pivotant est amené en position actionnée.

De préférence, le corps pivotant présente un débattement angulaire compris entre 30° et 60°, encore de préférence un débattement angulaire d'environ 45°, entre la position de repos et la position actionnée.

De manière non limitative, ledit corps pivotant peut prendre une pluralité de positions intermédiaires entre la position de repos et la position actionnée.

Grâce à l'invention, lorsque le dispositif de freinage est monté sur ledit guidon, ledit organe de guidage fait saillie depuis le support vers le haut ou vers le bas, ou autrement dit s'étend en partie haute ou en partie basse du support, contrairement aux dispositifs de freinage selon l'art antérieur dans lesquels l'organe de guidage fait saillie vers l'avant du support et du véhicule. Aussi, l'encombrement de l'organe de guidage du dispositif de freinage est particulièrement réduit et la compacité du dispositif de freinage est améliorée.

En outre, lorsque le dispositif de freinage est monté sur ledit guidon, l'axe de guidage s'étend sensiblement verticalement ou légèrement incliné par rapport à la verticale. Aussi, le câble de frein s'étend également sensiblement verticalement à la sortie du dispositif de freinage. Contrairement aux dispositifs de freinage connus, le câble de frein du dispositif de freinage selon l'invention ne s'étend pas vers l'avant du dispositif de freinage, ce qui réduit la gêne causée par le câble de frein.

Lorsque le dispositif de freinage est monté sur ledit guidon, l'axe de guidage s'étend avantageusement sensiblement parallèlement à la douille de direction du véhicule à roues.

Grâce au dispositif de freinage selon l'invention, la distance entre l'organe de guidage et le frein du véhicule est réduite. Le câble de frein décrit en outre une trajectoire plus directe entre l'organe de guidage et le frein du véhicule. Le câble de frein est en conséquence moins saillant et mieux protégé, ce qui réduit les risques d'endommagement, par exemple d'arrachement par une branche d'arbre. Le câble de frein décrit en outre moins de courbures entre l'organe de guidage et le frein. Il s'ensuit que les frottements subis par le câble de frein lors du freinage sont réduits. L'efficacité du freinage est donc améliorée.

De plus, dans la mesure où l'axe de guidage du câble de frein est sensiblement perpendiculaire à l'axe de pivotement, le câble de frein présente une courbure au sein du dispositif de freinage qui est réduite par rapport à des dispositifs de freinage dans lesquels l'axe de guidage est sensiblement parallèle à l'axe de pivotement. Les frottements subis par le câble de frein sont encore réduits.

De préférence, l'organe de guidage est disposé sous ledit plan passant par l'axe de pivotement et par l'axe longitudinal de l'élément de fixation, lorsque le dispositif de freinage est monté au guidon du véhicule. Il s'étend avantageusement également sous la zone de réception.

De préférence, lorsque le dispositif de freinage est monté au guidon du véhicule, l'organe de guidage fait saillie depuis le support vers le bas. De préférence, lorsque le dispositif de freinage est monté au guidon du véhicule, l'organe de guidage s'étend sous ledit plan passant par l'axe de pivotement et par l'axe longitudinal de l'élément de fixation.

De préférence, considérées dans un plan perpendiculaire à l'axe de pivotement, la distance entre le levier de freinage et ledit axe de pivotement est de préférence supérieure ou égale à la distance entre l'axe de pivotement et la zone de réception.

De préférence, l'axe de guidage est perpendiculaire à l'axe de pivotement.

De préférence, lorsque le corps pivotant est en position actionnée, l'axe de guidage ne passe pas par la zone de réception.

Préférentiellement, le levier de freinage et l'organe de guidage s'étendent d'un même côté dudit plan passant par l'axe de pivotement et l'axe longitudinal de l'élément de fixation.

De manière avantageuse, le dispositif de freinage est configuré de sorte que le câble de frein s'étend à l'intérieur dudit dispositif de freinage, dans un plan transversal à l'axe de pivotement, de préférence dans un plan perpendiculaire à l'axe de pivotement.

Avantageusement, ledit élément de fixation comprend un manchon de fixation pour monter le dispositif de freinage au guidon, ledit manchon de fixation s'étendant selon ledit axe longitudinal. Ce manchon de fixation présente une forme cylindrique. Il est destiné à enserrer un tube du guidon du véhicule.

Ledit manchon de fixation peut être une pièce distincte du support ou alternativement former un ensemble monobloc avec le support.

De manière avantageuse, le corps pivotant présente une portion coudée située entre la première portion et la seconde portion du corps pivotant, ledit axe de pivotement traversant ladite portion coudée. Autrement dit, l'axe de pivotement est positionné au niveau de ladite portion coudée.

Ladite portion coudée s'étend entre la zone de réception et le levier de freinage. La forme coudée du corps pivotant permet de décupler l'effort exercé par l'utilisateur sur le levier de freinage, facilitant la traction sur le câble de frein.

De préférence, la portion coudée est agencée de sorte que l'axe de pivotement soit positionné au-dessus des premières phalanges de la main de l'utilisateur. Un intérêt est d'améliorer l'ergonomie du dispositif de freinage car la trajectoire du levier de freinage correspond au mouvement naturel des doigts lors du freinage, et notamment le mouvement des troisièmes phalanges.

De préférence, l'organe de guidage est disposé entre la première partie et la seconde partie du support. Un intérêt est encore d'améliorer la compacité du dispositif de freinage. L'organe de guidage n'est donc pas monté à la seconde partie du support.

Encore de préférence, l'organe de guidage est disposé à proximité de l'élément de fixation.

Préférentiellement, le levier de freinage est amené à proximité de l'organe de guidage lorsque le corps pivotant est amené de la position de repos vers la position actionnée. Un intérêt est de réduire le risque que le levier de freinage ne tire sur le câble de frein lors de l'actionnement, dans le cas où ledit câble de frein serait emmêlé avec le levier de freinage.

Selon un aspect particulièrement avantageux, l'axe de guidage de l'organe de guidage s'étend transversalement audit plan passant par l'axe de pivotement et par l'axe longitudinal dudit élément de fixation. Un intérêt est là-encore de réduire l'encombrement du dispositif de freinage en évitant que l'organe de guidage ne fasse saillie vers l'avant du support et que le câble de frein ne s'étende également vers l'avant depuis le dispositif de freinage.

L'axe de guidage s'étend avantageusement sensiblement verticalement lorsque le dispositif de freinage est monté sur le guidon du véhicule.

Avantageusement, l'organe de guidage et l'axe de pivotement sont disposés de part et d'autre d'un plan perpendiculaire à l'axe de guidage et passant par l'axe longitudinal dudit élément de fixation.

L'organe de guidage s'étend par conséquent sous la main de l'utilisateur. L'organe de guidage s'étend également sous un plan horizontal passant par le guidon. Un intérêt est encore de réduire la distance et donc la longueur du chemin parcouru par le câble de frein entre l'organe de guidage et le frein.

Avantageusement, la zone de réception et l'organe de guidage sont également disposés de part et d'autre dudit plan perpendiculaire à l'axe de guidage et passant par l'axe longitudinal dudit élément de fixation.

De manière avantageuse, l'organe de guidage et l'élément de fixation s'étendent d'un même côté d'un plan passant par l'axe de pivotement et par le levier de freinage.

Préférentiellement, la seconde portion du corps pivotant comprend une surface extérieure, la zone de réception comprenant une cavité ménagée dans ladite surface extérieure et configurée pour recevoir la partie de fixation du câble de frein.

Ladite cavité maintient également la partie de fixation du câble de frein.

Une telle cavité est particulièrement adaptée pour recevoir et maintenir une tête de câble du câble de frein.

La partie de fixation du câble est avantageusement maintenue à l'intérieur de la cavité quelle que soit la position du corps pivotant.

De préférence, le corps pivotant comprend une portion couvrante surplombant ladite cavité lorsque le dispositif de freinage est monté sur un guidon. Un intérêt est de protéger la cavité et la partie de fixation du câble de frein, notamment en empêchant la pluie de pénétrer dans ladite cavité.

Avantageusement, la surface extérieure du corps pivotant est courbe et convexe au niveau de la portion couvrante. Un intérêt est de faciliter le positionnement de la partie de fixation du câble de frein dans la cavité, dans le cas où, en position actionnée du corps pivotant, ladite partie de fixation viendrait à sortir de ladite cavité. Le câble de frein peut glisser sur ladite surface extérieure courbe jusqu'à ramener ladite partie de fixation dans ladite cavité.

Avantageusement, le support comprend une partie sommitale située en regard de la portion couvrante du corps pivotant lorsque ce dernier est en position de repos, ladite partie sommitale présentant une surface externe courbe et convexe. Un intérêt est là-encore de guider le câble de frein afin de ramener la partie de fixation dans la cavité, dans le cas où elle s'en serait échappée.

De préférence, ladite cavité comprend une surface de contact sur laquelle prend appui ladite partie de fixation du câble de frein, ladite surface de contact s'étendant sensiblement perpendiculairement à l'axe de guidage lorsque le corps pivotant est dans la position de repos.

Lorsque le corps pivotant est en position de repos, la partie de fixation du câble de frein repose sur ladite surface de contact qui la maintient à l'intérieur de la cavité. L'effort exercé sur la partie d'extrémité compte-tenu de la tension exercée sur le câble de frein, par exemple par un organe de rappel disposé au niveau du frein du véhicule, est dirigé sensiblement perpendiculairement à ladite surface de contact, empêchant que ladite partie de fixation ne s'échappe de la cavité.

Un autre intérêt est d'éviter que l'eau ne s'accumule dans ladite cavité.

Lorsque le corps pivotant est amené en position actionnée, ladite zone de réception pivote et la surface de contact s'incline par rapport à un plan perpendiculaire à l'axe de guidage, vers l'axe de pivotement, ce qui tend à maintenir d'autant plus efficacement la partie de fixation dans la cavité.

De préférence, une gorge est ménagée dans ladite surface extérieure de la seconde portion du corps pivotant, ladite gorge débouchant dans ladite cavité et étant configurée pour recevoir au moins une portion du câble de frein située entre l'organe de guidage et la partie de fixation du câble de frein. Un intérêt est de guider le câble au sein du corps pivotant, jusqu'à la zone de réception. Un autre intérêt est de protéger le câble de frein et d'éviter qu'il ne se pince entre le corps pivotant et le support.

Ladite gorge est de préférence courbe, sa courbure décrit avantageusement une portion de cercle centrée sur l'axe de pivotement.

Ladite gorge s'étend avantageusement entre la zone de réception et l'organe de guidage.

Selon un aspect particulièrement avantageux, le corps pivotant comprend une portion circulaire de support configurée pour supporter le câble de frein lorsque ledit corps pivotant est amené en position actionnée, ladite portion circulaire de support définissant sensiblement une portion de cercle centrée sur l'axe de pivotement, l'organe de guidage étant configuré de sorte que l'axe de guidage demeure sensiblement tangent à ladite portion de cercle lorsque ledit corps pivotant est amené de ladite au moins une position de repos en position actionnée, et inversement.

Autrement dit, lorsque le corps pivotant passe de la position de repos à la position actionnée, le câble de frein s'enroule sur ladite portion circulaire de support.

Lorsque le corps pivotant est en position actionnée, le câble de frein présente, au sein du dispositif de freinage, une portion rectiligne s'étendant entre l'organe de guidage et la portion circulaire de support et une portion courbe supportée par ladite portion circulaire de support.

Cette configuration permet de limiter les frottements entre le câble de frein et le corps pivotant lors du passage de la position de repos à la position actionnée et inversement. L'efficacité du freinage est donc améliorée. Le guidage du câble au sein du dispositif de freinage est en outre amélioré.

De préférence, l'axe de guidage reste tangent à ladite portion circulaire de support, quelle que soit la position du corps pivotant.

Avantageusement, ladite gorge comprend une paroi de fond définissant ladite portion circulaire de support.

Préférentiellement, la seconde partie du support comprend une première aile et une deuxième aile s'étendant sensiblement parallèlement à la première aile, ledit corps pivotant s'étendant au moins en partie entre la première aile et la deuxième aile lorsque le corps pivotant est dans la position de repos.

Autrement dit, lesdites première et deuxième ailes définissent un logement configuré pour recevoir le corps pivotant.

De préférence, lesdites première et deuxième ailes flanquent une partie du corps pivotant s'étendant entre l'axe de pivotement et la seconde portion du corps pivotant ou encore entre la portion coudée et la seconde portion du corps pivotant.

Préférentiellement, la zone de réception s'étend entre la première aile et la deuxième aile lorsque le corps pivotant est dans la position de repos. Un intérêt est de protéger la zone de réception et la partie de fixation du câble de frein, notamment de la pluie. Un autre intérêt est d'assurer un maintien latéral de la partie de fixation dans la zone de réception.

Avantageusement, la zone de réception fait saillie au-dessus des première et deuxième ailes, lorsque le corps pivotant est en position actionnée. Autrement dit, ladite zone de réception s'étend au-dessus du support et est accessible pour l'utilisateur, par exemple pour intervenir sur ladite partie de fixation du câble de frein. Un intérêt est par exemple de pouvoir extraire la partie de fixation de ladite zone de réception.

De manière avantageuse, le dispositif de freinage comprend en outre un élément de rappel agencé de manière à ramener le corps pivotant en position de repos lorsque le levier de freinage n'est pas actionné, et le support comprend au moins une portion de butée et le corps pivotant comprend au moins un épaulement configuré pour venir en butée sur ladite portion de butée, lorsque ledit corps pivotant est ramené en position de repos. Un intérêt est qu'il n'est pas nécessaire d'exercer un effort sur le levier de freinage de manière à placer le corps pivotant en position de repos. Un autre intérêt est d'empêcher que le corps pivotant ne reste en position actionnée, ce qui génèrerait un freinage intempestif du véhicule.

L'invention porte par ailleurs sur un véhicule à roues ayant au moins une roue fixée à un cadre comprenant un guidon et au moins un frein associé à ladite roue et actionnable par un câble de frein ayant une partie de fixation, ledit véhicule comportant en outre un dispositif de freinage tel que décrit précédemment, la zone de réception du dispositif de freinage recevant la partie de fixation du câble de frein, ledit dispositif de freinage étant fixé au guidon au moyen dudit élément de fixation, le dispositif de freinage étant configuré pour exercer une traction sur le câble de frein, lorsque le corps pivotant est amené en position actionnée, afin de réaliser le freinage de ladite roue.

De préférence, ledit organe de guidage s'étend en-dessous dudit plan passant par l'axe de pivotement et par l'axe longitudinal dudit élément de fixation.

De préférence, ledit organe de guidage fait saillie vers le bas depuis le support. L'organe de guidage s'étend avantageusement sous la zone de fixation. L'axe de guidage s'étend avantageusement sensiblement verticalement.

### Brève description des dessins

L'invention sera mieux comprise à la lecture de la description qui suit de modes de réalisation de l'invention donnés à titre d'exemples non limitatif, en référence aux dessins annexés, sur lesquels :
[Fig. 1]la figure 1 est une vue en perspective d'un premier mode de réalisation du dispositif de freinage selon l'invention, le corps pivotant étant en position de repos;
[Fig. 2]la figure 2 est une vue en coupe du dispositif de freinage de la figure 1;
[Fig. 3] la figure 3 est une vue en coupe et en perspective du dispositif de freinage de la figure 1;
[Fig. 4]la figure 4 est une vue en perspective du dispositif de freinage de la figure 1, le corps pivotant étant en position actionnée;
[Fig. 5]la figure 5 est une vue de dessus du dispositif de freinage de la figure 4;
[Fig. 6]la figure 6 est une vue en coupe du dispositif de freinage de la figure 4;
[Fig. 7]la figure 7 est une vue de côté d'un véhicule à roue comportant le dispositif de freinage de la figure 1;
[Fig. 8]la figure 8 est une vue en perspective d'un deuxième mode de réalisation du dispositif de freinage selon l'invention, le corps pivotant étant en position de repos;
[Fig. 9]la figure 9 est une vue en perspective du dispositif de freinage de la figure 8, le corps pivotant étant en position actionnée; et
[Fig. 10]la figure 10 est une vue en coupe du dispositif de freinage de la figure 8.

### Description des modes de réalisation

L'invention porte sur un dispositif de freinage pour un véhicule comportant un guidon et un câble de frein, par exemple pour un vélo.

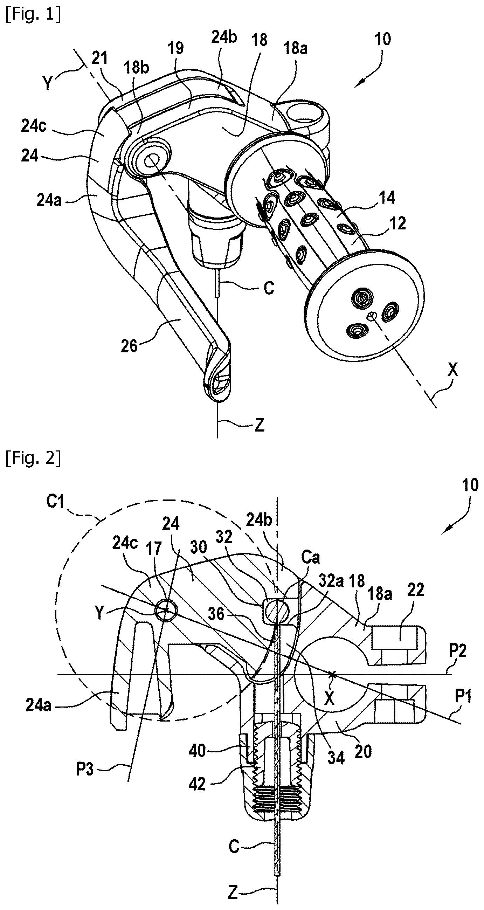

Les figures 1 à 7 illustrent un premier mode de réalisation donné à titre d'exemple non limitatif d'un dispositif de freinage **10** selon l'invention. Ce dispositif de freinage **10** est destiné à être monté sur un véhicule à roues **100**, tel un cycle, qui comporte un guidon **12** muni d'au moins une poignée de préhension 14, permettant à l'utilisateur de manipuler le guidon 12, et au moins un frein actionnable par un câble de frein C ayant une première extrémité munie d'une partie de fixation Ca, consistant dans cet exemple non limitatif en une tête de câble Ca, et une deuxième extrémité.

Le dispositif de freinage **10** comporte un support **18** qui présente une première partie 18a, formant une première extrémité pour le support, et une seconde partie 18b, opposée à la première partie **18a** et formant une seconde extrémité pour le support. La première partie **18a** du support **18** est munie d'un élément de fixation 20, constitué dans cet exemple non limitatif d'un manchon de fixation 20, visible en figure 2, permettant de fixer le dispositif de freinage **10** au guidon 12, et notamment à une portion tubulaire du guidon.

Comme on le constate sur la figure 2, le manchon de fixation **20** est fendu et comprend un moyen de serrage 22. Le manchon de fixation s'étend selon un axe longitudinal X et présente la forme générale d'un cylindre. Le manchon de fixation **20** est destiné à enserrer le guidon **12** du véhicule, de sorte que l'axe longitudinal X du manchon de fixation **20** est confondu avec l'axe du guidon et notamment avec l'axe de la poignée de préhension 14. Sans sortir du cadre de l'invention, le support **18** pourrait être formé en une seule pièce avec le guidon.

Comme on peut le voir en figure 1, la seconde partie **18b** du support **18** comprend une première aile **19** et une deuxième aile **21** s'étendant sensiblement parallèlement à la première aile 19. Lesdites première et deuxième ailes **19,21** sont distantes l'une de l'autre et font saillie depuis la première partie **18a** du support **18.** Lesdites première et deuxième ailes définissent un logement à l'intérieur du support.

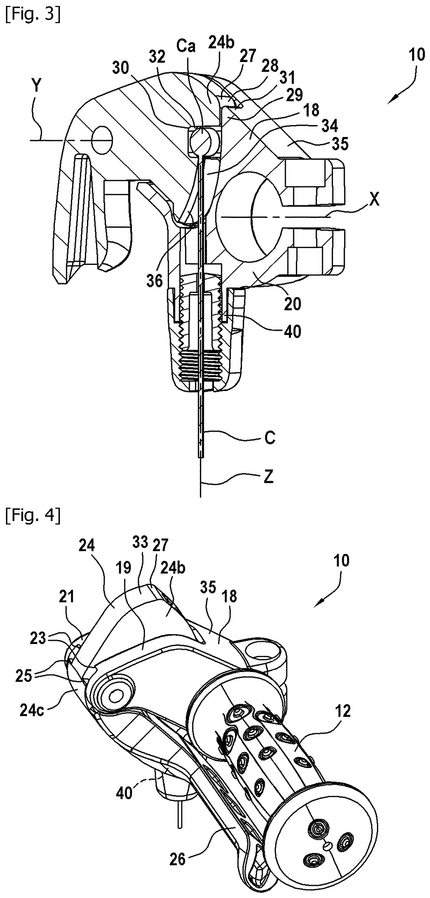

La seconde partie **18b** du support **18** comprend par ailleurs deux portions de butées **23,** illustrées en figure **4****,** formées respectivement sur la première aile **19** et sur la deuxième aile **21.**

Conformément à l'invention, le dispositif de freinage **10** comporte en outre un corps pivotant **24,** notamment visible sur la vue en coupe de la figure **2****.** Le corps pivotant **24** est monté pivotant par rapport au support **18** autour d'un axe de pivotement **Y,** entre une position de repos et une position actionnée. Plus précisément, le corps pivotant **24** est monté pivotant à la seconde partie **18b** du support. L'axe de pivotement **Y** est sensiblement parallèle à l'axe longitudinal **X** du manchon de fixation **20** et donc à l'axe de la poignée de préhension **14.** Cet axe de pivotement **Y** est disposé dans la seconde partie **18b** du support **18** et traverse ladite seconde partie.

Le corps pivotant **24** comprend une première portion **24a,** une seconde portion **24b,** opposée à la première portion, et une portion coudée **24c** située entre la première portion et la seconde portion. L'axe de pivotement **Y** est disposé entre la première portion **24a** et la seconde portion **24b** du corps pivotant. L'axe de pivotement **Y** traverse ladite portion coudée **24c.**

Le corps pivotant **24** s'étend en partie entre les première et deuxième ailes **19,21** du support **18,** ou autrement dit à l'intérieur du logement formé par lesdites première et deuxième ailes. Les première et deuxième ailes **19,21** flanquent une portion du corps pivotant s'étendant entre la portion coudée **24c** et la seconde portion **24b.** Lorsque le corps pivotant **24** est dans la position de repos, les deux ailes **19,21** flanquent la seconde portion **24b** du corps pivotant.

Les extrémités des première et deuxième ailes **19,21** présentent chacune un orifice recevant un arbre qui traverse la portion coudée **24c** du corps pivotant afin de réaliser la liaison pivot entre le corps pivotant **24** et le support **18.** Le dispositif de freinage **10** comprend en outre un élément de rappel **17,** par exemple un ressort, disposé autour de l'arbre traversant la portion coudée. L'élément de rappel **17** est agencé de manière à ramener le corps pivotant **24** en position de repos lorsque le levier de freinage n'est pas actionné.

Le corps pivotant **24** comprend en outre deux épaulements **25,** particulièrement visibles en figure **4****,** formés au niveau de la portion coudée **24c.** Les épaulements **25** sont configurés pour venir en butée sur lesdites portions de butée **23,** lorsque ledit corps pivotant est amené en position de repos.

Le corps pivotant **24** comprend un levier de freinage **26** faisant saillie depuis la première portion **24a** du corps pivotant **24.** Ledit levier **26** s'étend sensiblement parallèlement à l'axe longitudinal **X** du manchon de fixation **20** et sensiblement parallèlement à l'axe de pivotement **Y.** Autrement dit, le levier de freinage **26** s'étend sensiblement perpendiculairement au corps pivotant **24.** En particulier, le levier de freinage **26** s'étend sensiblement parallèlement à la poignée de préhension **14,** selon sensiblement toute la longueur de cette dernière.

Tel qu'on peut le voir sur la vue en coupe de la figure **3****,** le corps pivotant **24** comprend une surface extérieure **28,** parallèle à l'axe de pivotement **Y.**

En se référant aux figures **2** et **3****,** on constate que la seconde portion **24b** du corps pivotant **24** comprend une zone de réception **30** pour la tête de câble **Ca.** La zone de réception **30** s'étend entre un plan passant par la première aile et un plan passant par la deuxième aile.

Dans cet exemple non limitatif, la zone de réception **30** comprend une cavité **32** ménagée dans la surface extérieure **28** du corps pivotant, au niveau de la seconde portion **24b** du corps pivotant. La cavité **32** est configurée pour recevoir la tête de câble **Ca** du câble de frein C. La cavité **32** présente une forme parallélépipédique. La cavité **32** présente notamment une surface de contact **32a** sur laquelle prend appui ladite tête **Ca** du câble de frein. Ladite surface de contact **32a** forme une paroi inférieure de la cavité.

Par ailleurs, une gorge **34** est ménagée dans ladite surface extérieure **28** du corps pivotant **24,** au niveau de la seconde portion **24b** du corps pivotant. Ladite gorge **34** débouche dans la cavité **32** et est configurée pour recevoir une portion du câble de frein C. Ladite gorge **34** est courbe.

Tel qu'illustré en figure **2** et **3****,** le corps pivotant **24** comprend de plus une portion circulaire de support **36** configurée pour supporter le câble de frein **C** lorsque ledit corps pivotant **24** est amené en position actionnée. Dans cet exemple non limitatif, la portion circulaire de support **36** forme le fond de la gorge **34.**

Ladite portion circulaire de support **36** définit une portion de cercle **C1** centrée sur l'axe de pivotement **Y** et dont le rayon correspond à la distance entre l'axe de pivotement **Y** et ladite portion circulaire de support **36.** Quelle que soit la position du corps pivotant, ledit cercle **C1** passe par ladite portion circulaire de support **36.**

Tel qu'on le constate en figure **2****,** le support **18** comprend par ailleurs un organe de guidage **40** configuré pour guider l'entrée du câble de frein **C** dans le support **18.** L'organe de guidage présente un axe de guidage **Z** du câble de frein et s'étend selon ledit axe de guidage **Z.** Cet axe de guidage **Z** est perpendiculaire à l'axe longitudinal **X** du manchon de fixation **20.** L'organe de guidage **40** présente une forme sensiblement cylindrique et présente un trou traversant configuré pour recevoir le câble de frein **C.**

L'organe de guidage comprend une butée de gaine **42,** de forme oblongue.

L'organe de guidage **40** est disposé entre la première partie **18a** et la seconde partie **18b** du support. Le câble de frein entre dans le support **18** par l'intermédiaire de l'organe de guidage **40.** Ladite gorge **34** s'étend entre l'organe de guidage **40** et la zone de réception **30.** Une portion du câble de frein située entre la tête de câble **34** et l'organe de guidage **40** s'étend dans la gorge **34.**

Au sein du dispositif de freinage **10,** le câble de frein **C** s'étend dans un plan transversal à l'axe de pivotement **Y,** de préférence perpendiculaire à l'axe de pivotement, quelle que soit la position du corps pivotant.

L'axe de guidage **Z** de l'organe de guidage **40** est tangent audit cercle **C1** et à la portion de cercle définie par la portion circulaire de support **36.** Un intérêt est de réduire les frottements entre le câble de frein **C** et le corps pivotant **24** lors du pivotement du corps pivotant.

Selon l'invention, et tel qu'on le constate en figure **2****,** l'axe de guidage de guidage **Z** de l'organe de guidage **40** est sensiblement perpendiculaire à l'axe de pivotement **Y** du corps pivotant **24.**

Toujours selon l'invention, on constate que la zone de réception **30** pour la tête de câble **Ca,** formant une partie de fixation, et l'organe de guidage **40** s'étendent de part et d'autre d'un premier plan **P1** passant par l'axe de pivotement **Y** et par l'axe longitudinal **X** du manchon de fixation **20.** Autrement dit, l'organe de guidage **40** s'étend d'un premier côté dudit premier plan **P1** tandis que la zone de réception **30** s'étend d'un second côté dudit premier plan **P1.** L'organe de guidage **40** s'étend sous ledit premier plan **P1.** Aussi, l'organe de guidage **40** ne fait pas saillie vers l'avant du support et du véhicule, améliorant ainsi la compacité du dispositif de freinage.

L'axe de guidage **Z** s'étend sensiblement verticalement, de sorte que le câble de frein **C** entre dans le support **18** selon ledit axe de guidage sensiblement vertical.

Le levier de freinage **26** et l'organe de guidage **40** s'étendent d'un même côté dudit premier plan **P1** passant par l'axe de pivotement **Y** et par l'axe longitudinal **X** du manchon de fixation **20.**

Sur la figure **2****,** on constate que l'axe de guidage **Z** s'étend transversalement audit premier plan **P1** passant par l'axe de pivotement **Y** et par l'axe longitudinal **X** du manchon de fixation **20.**

Par ailleurs, l'organe de guidage **40** et l'axe de pivotement **Y** sont disposés de part et d'autre d'un deuxième plan **P2** perpendiculaire à l'axe de guidage **Z** et passant par l'axe longitudinal **X** du manchon de fixation **20.** De même, la zone de réception **30** et l'organe de guidage s'étendent de part et d'autre dudit deuxième plan **P2.** La zone de réception **30** et l'axe de pivotement **Y** s'étendent d'un même côté du deuxième plan **P2.**

Toujours en figure **2****,** on constate que l'organe de guidage **40** et le manchon de fixation **20** s'étendent d'un même côté d'un troisième plan **P3** passant par l'axe de pivotement **Y** et par le levier de freinage **26.**

L'angle entre le premier plan et le troisième plan est d'environ 90°.

L'organe de guidage **40** est disposé entre le manchon de fixation **20** et le levier de freinage **26.**

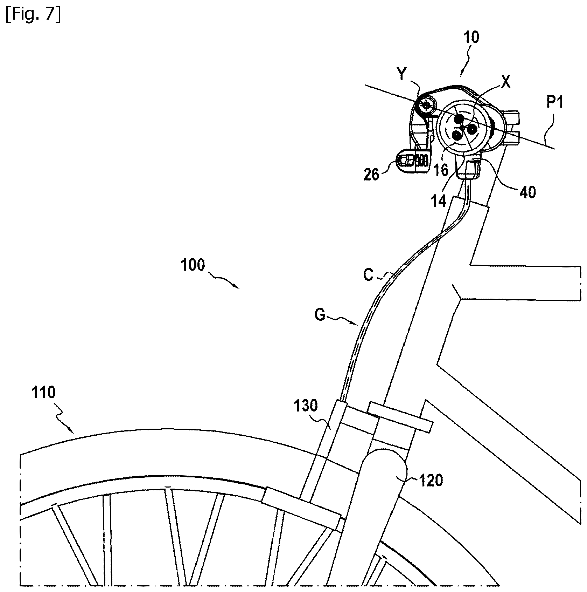

Sur la figure **7****,** on a représenté la partie avant d'un véhicule à roues, en l'espèce un vélo **100** qui comporte un dispositif de freinage **10** selon l'invention. Le dispositif de freinage **10** est monté sur un tube du guidon **12.** Le vélo **100** comprend au moins une roue avant **110** fixée à un cadre **120** et un frein **130** qui est associé à la roue pour la freiner et qui est relié au dispositif de freinage **10** par l'intermédiaire du câble de frein **C.**

Lorsque le dispositif de freinage **10** est monté sur le vélo **100,** l'organe de guidage **40** s'étend sous le premier plan **P1** passant par l'axe de pivotement **Y** et par l'axe longitudinal **X** du manchon de fixation et également sous le deuxième plan **P2** perpendiculaire à l'axe de guidage **Z** et passant par l'axe longitudinal **X** du manchon de fixation **20.** L'organe de guidage **40** est situé en partie basse du support **18** et sous la zone de réception **30** du corps pivotant **24** et sous le manchon de fixation **20.** L'organe de guidage **40** fait saillie vers le bas depuis le support **18.**

L'axe de guidage **Z** de l'organe de guidage **20** s'étend sensiblement verticalement. L'organe de guidage **40** est dirigé sensiblement vers le frein **130.**

Aussi, comme on le constate sur cette figure **7****,** le câble de frein **C** entre sensiblement verticalement dans le support **18.** Grâce à l'invention, la distance entre l'organe de guidage **40** et le frein **130** est ainsi réduite. Le câble de frein **C** s'étend le long du cadre et décrit une trajectoire sensiblement rectiligne. Le câble de frein ne décrit pas de boucle.

Sur les figures **1** à **3****,** le corps pivotant **24** est en position de repos. L'axe de guidage **Z** est alors sensiblement perpendiculaire à un plan passant par l'axe de pivotement **Y** et par la portion de réception **30.** La portion de réception **30** s'étend entre les première et deuxième ailes. Les épaulements **25** du corps pivotant **24** sont en butée sur les portions de butées **23** du support **18.**

Dans cette position de repos, le levier de freinage **26** est distant de la poignée de préhension **14** et de l'organe de guidage **40.** Au sein du support **18,** le câble de frein **C** est tangent au cercle **C1** et à la portion circulaire de support **36.** En outre, comme illustré en figure **2****,** la surface de contact **32a** de la cavité **32** s'étendant sensiblement perpendiculairement à l'axe de guidage **Z.** La tête de câble **Ca** est en appui sur ladite surface de contact **32a,** qui la maintient à l'intérieur de la cavité **32.** De plus, dans la position de repos, l'axe de guidage **Z** passe par ladite zone de réception **30.**

Le corps pivotant **24** comprend une portion couvrante **27** surplombant la cavité **32** de la zone de réception **30,** protégeant ladite zone de réception de la pluie. Ladite portion couvrante **27** décrit une courbure permettant de guider le câble de frein, afin de ramener la partie de fixation **Ca** dans la cavité **32** dans le cas où elle en serait sortie.

Le support **18** comprend une partie sommitale **29,** disposée en regard de la portion couvrante **27** du corps pivotant lorsque le corps pivotant est en position de repos. La partie sommitale **29** comprend une surface externe 31 courbe, sur laquelle peut glisser le câble de frein, afin de guider la tête de câble **Ca** à l'intérieur de la cavité **32.**

Le corps pivotant **24** comprend en outre une surface supérieure **33** qui affleure une surface supérieure **35** du support **18** lorsque le corps pivotant est en position de repos. Lesdites surfaces supérieures **33,35** sont illustrées en figure **4****.**

Tel qu'illustré en figures **4**à **6****,** pour réaliser le freinage, l'utilisateur actionne le levier de freinage **26** en pliant les doigts. Le corps pivotant **24** pivote alors de la position de repos jusqu'en position actionnée. Le levier de freinage **26** est déplacé vers le manchon de fixation **20** et la poignée de préhension **14.** En outre, le levier de freinage **26** est amené à proximité de l'organe de guidage **40** lorsque le corps pivotant est amené en position actionnée.

Lors de l'actionnement du corps pivotant **24,** la cavité **32** de la zone de réception **30** est déplacée et éloignée de l'organe de guidage **40** et du manchon de fixation **20** lorsque le corps pivotant est amené en position actionnée. La zone de réception **30** est alors située au-dessus des deux ailes du support. Dans cet exemple non limitatif, la zone de réception **30** décrit une trajectoire circulaire suivant le cercle C1 lors de l'actionnement.

Ce déplacement de la zone de réception **30** entraine un déplacement de la tête de câble **Ca** du câble de frein **C** qui prend appui sur la surface de contact **32a** de la cavité **32.** La tête de câble **Ca** décrit donc une trajectoire circulaire. Un effort de traction est exercé par le corps pivotant **24** sur le câble de frein **C,** ce qui conduit à un freinage du véhicule.

Lors du passage en position actionnée du corps pivotant, la surface de contact **32a** s'incline par rapport à l'axe de guidage **Z** vers l'axe de pivotement **Y.** La tête de câble **Ca** est ainsi maintenue efficacement dans la cavité **32.**

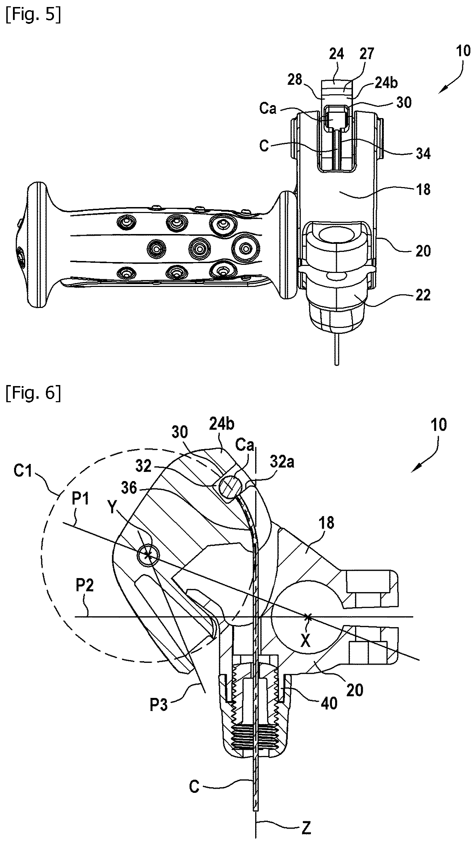

On constate en figures **4** et **5** que dans la position actionnée, la seconde portion **24b** du corps pivotant **24** fait saillie au-dessus du support **18.** La cavité **32** s'étend hors du logement formé par les première et seconde ailes **19,21.** La cavité **32** s'étend en outre au-dessus du support **18** de sorte que la tête de câble **Ca** est dès lors accessible.

On constate sur la figure **6** que lors du passage de la position de repos à la position actionnée, le câble de frein **C** est supporté par la portion circulaire de support **36** et s'enroule sur cette portion circulaire de support. L'axe de guidage **Z** reste tangent au cercle **C1** et donc à ladite portion circulaire de support **36.**

Lorsque le corps pivotant **24** est en position actionnée, l'axe de guidage **Z** ne passe plus par la portion de réception **30.** Le câble de frein **C** présente alors, au sein du dispositif de freinage **10,** une portion rectiligne s'étendant entre l'organe de guidage **40** et l'entrée de la gorge **34,** et une portion courbe s'étendant dans la gorge **34** et reposant sur la portion circulaire de support **36.**

L'organe de guidage **40** est configuré de sorte que l'axe de guidage **Z** demeure sensiblement tangent à ladite portion circulaire de support **36** lorsque ledit corps pivotant **24** est amené de ladite position de repos en position actionnée, et inversement. Les frottements entre le câble de frein **C** et le corps pivotant **24** sont réduits, ce qui facilite le freinage.

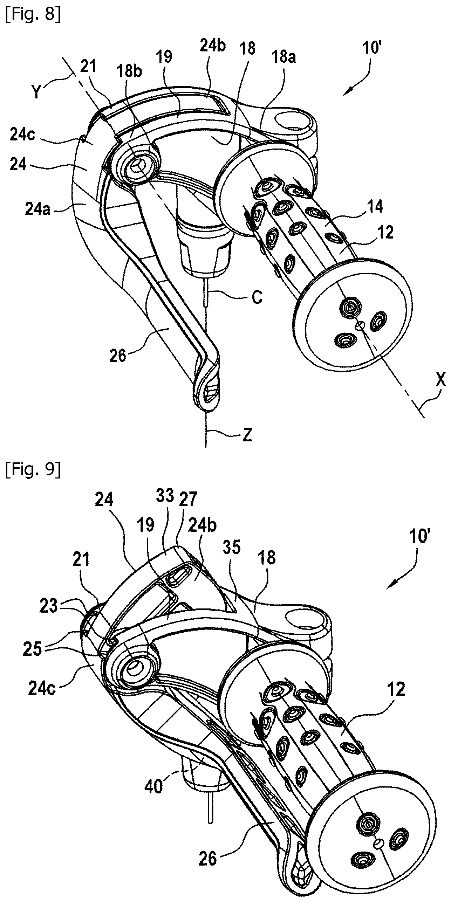

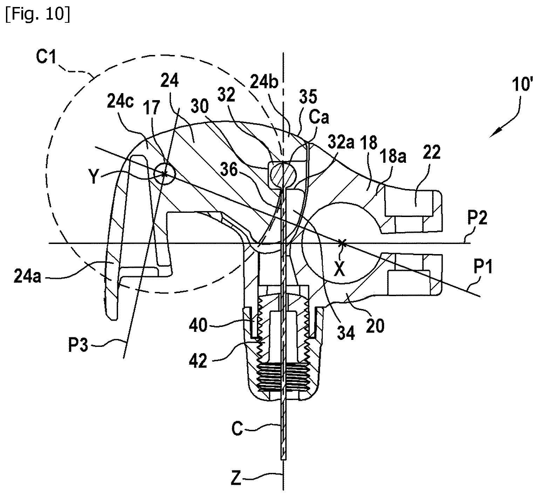

Les figures **8, 9** **et** **10** illustrent un deuxième mode de réalisation donné à titre d'exemple non limitatif d'un dispositif de freinage **10'** selon l'invention. Dans ce deuxième mode de réalisation, la surface supérieure **35** du support **18** décrit une courbure plus douce et moins prononcée que celle du premier mode de réalisation des figures **1**à **7****,** notamment au niveau des ailes **19,21.** En outre, des renfoncements sont formés latéralement dans le support **18** et dans la seconde portion **24b** du corps pivotant **24.**

## Revendications

1. Dispositif de freinage (10) pour un véhicule (100) à roues comportant un guidon (12) et un câble de frein (C) ayant une partie de fixation (Ca), ledit dispositif de freinage comportant :
- un support (18) présentant une première partie (18a) munie d'un élément de fixation (20) au guidon et une seconde partie (18b), opposée à la première partie, l'élément de fixation s'étendant selon un axe longitudinal (X); et
- un corps pivotant (24) monté à la seconde partie du support de manière pivotante autour d'un axe de pivotement (Y) qui est sensiblement parallèle à l'axe longitudinal de l'élément de fixation, entre au moins une position de repos et une position actionnée, le corps pivotant comprenant un levier de freinage (26) faisant saillie, selon une direction sensiblement parallèle à l'axe longitudinal de l'élément de fixation, depuis une première portion du corps pivotant (24a), le corps pivotant présentant en outre une seconde portion (24b) munie d'une zone de réception (30) pour recevoir la partie de fixation du câble de frein, l'axe de pivotement étant disposé entre la première portion et la seconde portion du corps pivotant,
**caractérisé en ce que** le support comporte en outre un organe de guidage (40) de l'entrée du câble de frein dans le support, ledit organe de guidage présentant un axe de guidage (Z) du câble de frein qui est sensiblement perpendiculaire à l'axe de pivotement, l'organe de guidage et la zone de réception s'étendant de part et d'autre d'un plan (P1) passant par l'axe de pivotement et par l'axe longitudinal de l'élément de fixation.

2. Dispositif de freinage selon la revendication 1, dans lequel ledit élément de fixation (20) comprend un manchon (20) de fixation pour monter le dispositif de freinage (10) au guidon (100), ledit manchon de fixation s'étendant selon ledit axe longitudinal (X).

3. Dispositif de freinage selon la revendication 1 ou 2, dans lequel le corps pivotant (24) présente une portion coudée (24c) située entre la première portion (24a) et la seconde portion (24b) du corps pivotant, ledit axe de pivotement (Y) traversant ladite portion coudée.

4. Dispositif de freinage selon l'une quelconque des revendications 1 à 3, dans lequel l'organe de guidage (40) est disposé entre la première partie (18a) et la seconde partie (18b) du support (18).

5. Dispositif de freinage selon l'une quelconque des revendications 1 à 4, dans lequel le levier de freinage (26) est amené à proximité de l'organe de guidage (40) lorsque le corps pivotant (24) est amené de la position de repos vers la position actionnée.

6. Dispositif de freinage selon l'une quelconque des revendications 1 à 5, dans lequel l'axe de guidage (Z) de l'organe de guidage (40) s'étend transversalement audit plan (P1) passant par l'axe de pivotement (Y) et par l'axe longitudinal (X) dudit élément de fixation (20).

7. Dispositif de freinage selon l'une quelconque des revendications 1 à 6, dans lequel l'organe de guidage (40) et l'axe de pivotement (Y) sont disposés de part et d'autre d'un plan (P2) perpendiculaire à l'axe de guidage (Z) et passant par l'axe longitudinal (X) dudit élément de fixation (20).

8. Dispositif de freinage selon l'une quelconque des revendications 1 à 7, dans lequel l'organe de guidage (40) et l'élément de fixation (20) s'étendent d'un même côté d'un plan (P3) passant par l'axe de pivotement (Y) et par le levier de freinage (26).

9. Dispositif de freinage selon l'une quelconque des revendications 1 à 8, dans lequel la seconde portion (24b) du corps pivotant (24) comprend une surface extérieure (28), la zone de réception (30) comprenant une cavité (32) ménagée dans ladite surface extérieure et configurée pour recevoir la partie de fixation (Ca) du câble de frein (C).

10. Dispositif de freinage selon la revendication 9, dans lequel ladite cavité (32) comprend une surface de contact (32a) sur laquelle prend appui ladite partie de fixation (Ca) du câble de frein (C), ladite surface de contact s'étendant sensiblement perpendiculairement à l'axe de guidage (Z) lorsque le corps pivotant (24) est dans la position de repos.

11. Dispositif de freinage selon la revendication 9 ou 10, dans lequel une gorge (34) est ménagée dans ladite surface extérieure (28) de la seconde portion (24b) du corps pivotant (24), ladite gorge débouchant dans ladite cavité (32) et étant configurée pour recevoir au moins une portion du câble de frein (C) située entre l'organe de guidage (40) et la partie de fixation (Ca) du câble de frein.

12. Dispositif de freinage selon l'une quelconque des revendications 1 à 11, dans lequel le corps pivotant (24) comprend une portion circulaire de support (36) configurée pour supporter le câble de frein (C) lorsque ledit corps pivotant est amené en position actionnée, ladite portion circulaire de support définissant sensiblement une portion de cercle (C1) centrée sur l'axe de pivotement (Y), l'organe de guidage (40) étant configuré de sorte que l'axe de guidage (Z) demeure sensiblement tangent à ladite portion de cercle lorsque ledit corps pivotant est amené de ladite au moins une position de repos en position actionnée, et inversement.

13. Dispositif de freinage selon les revendications 11 et 12, dans lequel ladite gorge (34) comprend une paroi de fond (36) définissant ladite portion circulaire de support (36).

14. Dispositif de freinage selon l'une quelconque des revendications 1 à 13, dans lequel la seconde partie du support (18) comprend une première aile (19) et une deuxième aile (21) s'étendant sensiblement parallèlement à la première aile, ledit corps pivotant (24) s'étendant au moins en partie entre la première aile et la deuxième aile lorsque le corps pivotant est dans la position de repos.

15. Dispositif de freinage selon la revendication 14, dans lequel la zone de réception (30) s'étend entre la première aile (19) et la deuxième aile (21) lorsque le corps pivotant (24) est dans la position de repos.

16. Dispositif de freinage selon l'une quelconque des revendications 1 à 15, comportant en outre un élément de rappel agencé de manière à ramener le corps pivotant (24) en position de repos lorsque le levier de freinage (26) n'est pas actionné, et dans lequel le support (18) comprend au moins une portion de butée (23) et dans lequel le corps pivotant comprend au moins un épaulement (25) configuré pour venir en butée sur ladite portion de butée, lorsque ledit corps pivotant est ramené en position de repos.

17. Véhicule à roues (100) ayant au moins une roue (110) fixée à un cadre (120) comprenant un guidon (12) et au moins un frein (130) associé à ladite roue et actionnable par un câble de frein (C) ayant une partie de fixation (Ca), ledit véhicule comportant en outre un dispositif de freinage (10) selon l'une quelconque des revendications 1 à 16, la zone de réception (30) du dispositif de freinage recevant la partie de fixation du câble de frein, ledit dispositif de freinage étant fixé au guidon au moyen dudit élément de fixation (20), le dispositif de freinage étant configuré pour exercer une traction sur le câble de frein, lorsque le corps pivotant (24) est amené en position actionnée, afin de réaliser le freinage de ladite roue.

18. Véhicule selon la revendication 17, dans lequel ledit organe de guidage (40) s'étend en-dessous dudit plan (P1) passant par l'axe de pivotement (Y) et par l'axe longitudinal (X) dudit élément de fixation (20).

## Patentansprüche

1. Bremsvorrichtung (10) für ein Radfahrzeug (100), umfassend eine Führung (12) und ein Bremsseil (C), das einen Befestigungsteil (Ca) aufweist, wobei die Bremsvorrichtung Folgendes umfasst:
- eine Halterung (18), die einen ersten Teil (18a) bezeichnet, der mit einem Befestigungselement (20) an der Führung ausgestattet ist, und einen zweiten Teil (18b) gegenüber dem ersten Teil, wobei sich das Befestigungselement entlang einer Längsachse (X) erstreckt; und
- einen Schwenkkörper (24), der an den zweiten Teil der Halterung auf schwenkende Weise um eine Schwenkachse (Y), die im Wesentlichen parallel zur Längsachse des Befestigungselements ist, zwischen mindestens einer Ruheposition und einer betätigten Position montiert ist, wobei der Schwenkköper einen Bremshebel (26) umfasst, der entlang einer Richtung, die im Wesentlichen parallel zur Längsachse des Befestigungselements ist, von einem ersten Abschnitt des Schwenkkörpers (24a) vorspringt, wobei der Schwenkkörper außerdem einen zweiten Abschnitt (24b) bezeichnet, der mit einem Aufnahmebereich (30) versehen ist, um den Befestigungsteil des Bremsseils aufzunehmen, wobei die Schwenkachse zwischen dem ersten Abschnitt und dem zweiten Abschnitt des Schwenkkörpers angeordnet ist,
**dadurch gekennzeichnet, dass** die Halterung außerdem ein Führungselement (40) für den Eintritt des Bremsseils in die Halterung umfasst, wobei das Führungselement eine Führungsachse (Z) des Bremsseils bezeichnet, die im Wesentlichen senkrecht zur Schwenkachse ist, wobei sich das Führungselement und der Aufnahmebereich auf beiden Seiten der Ebene (P1) erstrecken, die durch die Schwenkachse und durch die Längsachse des Befestigungselements verläuft.

2. Bremsvorrichtung (1) nach Anspruch 1, wobei das Befestigungselement (20) eine Befestigungshülse (20) umfasst, um die Bremsvorrichtung (10) an die Führung (100) zu montieren, wobei sich die Befestigungshülse entlang der Längsachse (X) erstreckt.

3. Bremsvorrichtung nach Anspruch 1 oder 2, wobei der Schwenkkörper (24) außerdem einen abgewinkelten Abschnitt (24c) bezeichnet, der sich zwischen dem ersten Abschnitt (24a) und dem zweiten Abschnitt (24b) des Schwenkkörpers befindet, wobei die Schwenkachse (Y) den abgewinkelten Abschnitt quert.

4. Bremsvorrichtung nach einem der Ansprüche 1 bis 3, wobei das Führungselement (40) zwischen dem ersten Teil (18a) und dem zweiten Teil (18b) der Halterung (18) angeordnet ist.

5. Bremsvorrichtung nach einem der Ansprüche 1 bis 4, wobei der Bremshebel (26) in die Nähe des Führungselements (40) gebracht wird, wenn der Schwenkkörper (24) aus der Ruheposition in die betätigte Position gebracht wird.

6. Bremsvorrichtung nach einem der Ansprüche 1 bis 5, wobei sich die Führungsachse (Z) des Führungselements (40) quer zu der Ebene (P1) erstreckt, die durch die Schwenkachse (Y) und durch die Längsachse (X) des Befestigungselements (20) verläuft.

7. Bremsvorrichtung nach einem der Ansprüche 1 bis 6, wobei das Führungselement (40) und die Schwenkachse (Y) auf beiden Seiten einer Ebene (P2) angeordnet sind, die senkrecht zur Führungsachse (Z) ist und durch die Längsachse (X) des Befestigungselements (20) verläuft.

8. Bremsvorrichtung nach einem der Ansprüche 1 bis 7, wobei sich das Führungselement (40) und das Befestigungselement (20) auf einer gleichen Seite einer Ebene (P3) erstrecken, die durch die Schwenkachse (Y) und durch den Bremshebel (26) verläuft.

9. Bremsvorrichtung nach einem der Ansprüche 1 bis 8, wobei der zweite Abschnitt (24b) des Schwenkkörpers (24) eine äußere Fläche (28) umfasst, wobei der Aufnahmebereich (30) einen Hohlraum (32) umfasst, der in der äußeren Fläche ausgebildet und konfiguriert ist, um den Befestigungsteil (Ca) des Bremsseils (C) aufzunehmen.

10. Bremsvorrichtung nach Anspruch 9, wobei der Hohlraum (32) eine Kontaktfläche (32a) umfasst, auf der der Befestigungsabschnitt (Ca) des Bremsseils (C) aufliegt, wobei sich die Kontaktfläche im Wesentlichen senkrecht zur Führungsachse (Z) erstreckt, wenn sich der Schwenkkörper (24) in der Ruheposition befindet.

11. Bremsvorrichtung nach Anspruch 9 oder 10, wobei eine Nut (34) in der äußeren Fläche (28) des zweiten Abschnitts (24b) des Schwenkkörpers (24) ausgebildet ist, wobei die Nut in den Hohlraum (32) mündet und konfiguriert ist, um mindestens einen Abschnitt des Bremsseils (C) aufzunehmen, der sich zwischen dem Führungselement (40) und dem Befestigungsteil (Ca) des Bremsseils befindet.

12. Bremsvorrichtung nach einem der Ansprüche 1 bis 11, wobei der Schwenkkörper (24) einen kreisförmigen Halterungsabschnitt (36) umfasst, der konfiguriert ist, um das Bremskabel (C) zu halten, wenn der Schwenkkörper in die betätigte Position gebracht wird, wobei der kreisförmige Halterungsabschnitt im Wesentlichen einen Kreisabschnitt (C1) definiert, der auf der Schwenkachse (Y) zentriert ist, wobei das Führungselement (40) so konfiguriert ist, dass die Führungsachse (Z) im Wesentlichen tangential zu dem Kreisabschnitt bleibt, wenn der Schwenkkörper von der mindestens einen Ruheposition in die betätigte Position und umgekehrt gebracht wird.

13. Bremsvorrichtung nach Anspruch 11 und 12, wobei die Nut (34) eine Bodenwand (36) umfasst, die den kreisförmigen Halterungsabschnitt (36) definiert.

14. Bremsvorrichtung nach einem der Anspruche 1 bis 13, wobei der zweite Teil der Halterung (18) einen ersten Flügel (19) und einen zweiten Flügel (21) umfasst, der sich im Wesentlichen parallel zum ersten Flügel erstreckt, wobei sich der Schwenkkörper (24) mindestens teilweise zwischen dem ersten Flügel und dem zweiten Flügel erstreckt, wenn sich die Schwenkachse in der Ruheposition befindet.

15. Bremsvorrichtung nach Anspruch 14, wobei sich der Aufnahmebereich (30) zwischen dem ersten Flügel (19) und dem zweiten Flügel (21) erstreckt, wenn sich der Schwenkkörper (24) in der Ruheposition befindet.

16. Bremsvorrichtung nach einem der Anspruche 1 bis 15, umfassend außerdem ein Rückstellelement, das derart angeordnet ist, dass es den Schwenkkörper (24) in die Ruheposition zurückbringt, wenn der Bremshebel (26) nicht betätigt wird, und wobei die Halterung (18) mindestens einen Anschlagsabschnitt (23) umfasst und wobei der Schwenkkörper mindestens einen Absatz (25) umfasst, der konfiguriert ist, um an den Anschlagabschnitt zu stoßen, wenn der Schwenkkörper in die Ruheposition zurückgebracht wird.

17. Radfahrzeug (100), das mindestens ein Rad (110) aufweist, das an einen Rahmen (120) befestigt ist, umfassend eine Führung (12) und mindestens eine Bremse (130),die dem Rad zugewiesen ist und durch ein Bremskabel (C) betätigt werden kann, das einen Befestigungsteil (Ca) aufweist, wobei das Fahrzeug außerdem eine Bremsvorrichtung (10) nach einem der Ansprüche 1 bis 16 umfasst, wobei der Aufnahmebereich (30) der Bremsvorrichtung den Befestigungsteil des Bremsseils aufnimmt, wobei die Bremsvorrichtung mit Hilfe des Befestigungselements (20) an die Führung befestigt ist, wobei die Bremsvorrichtung konfiguriert ist, um einen Zug auf das Bremsseil auszuüben, wenn der Schwenkkörper (24) in die betätigte Position gebracht wird, um die Bremsung des Rads durchzuführen.

18. Fahrzeug nach Anspruch 17, wobei sich das Führungselement (40) unter der Ebene (P1) erstreckt, die durch die Schwenkachse (Y) und durch die Längsachse (X) des Befestigungselements (20) verläuft.

## Claims

1. A braking device (10) for a wheeled vehicle (100) including a handlebar (12) and a brake cable (C) having an attaching part (Ca), said braking device including:
- a support (18) having a first part (18a) equipped with an attaching element (20) for attaching to the handlebar and a second part (18b), opposite the first part, the attaching element extending along a longitudinal axis (X); and
- a pivoting body (24) mounted on the second part of the support pivotably about an axis of pivot (Y) which is substantially parallel to the longitudinal axis of the attaching element, between at least one rest position and an actuated position, the pivoting body comprising a brake lever (26) projecting, along a direction substantially parallel to the longitudinal axis of the attaching element, from a first portion of the pivoting body (24a), the pivoting body moreover having a second portion (24b) equipped with a receiving area (30) for receiving the attaching part of the brake cable, the axis of pivot being disposed between the first portion and the second portion of the pivoting body,
**characterized in that** the support further includes a guide member (40) for guiding the entry of the brake cable into the support, said guide member having a guide axis (Z) for the brake cable which is substantially perpendicular to the axis of pivot, the guide member and the receiving area extending on either side of a plane (P1) passing through the axis of pivot and through the longitudinal axis of the attaching element.

2. The braking device as claimed in claim 1, wherein said attaching element (20) comprises an attaching sleeve (20) for mounting the braking device (10) on the handlebar (100), said attaching sleeve extending along said longitudinal axis (X).

3. The braking device as claimed in claim 1 or 2, wherein the pivoting body (24) has a bent portion (24c) located between the first portion (24a) and the second portion (24b) of the pivoting body, said axis of pivot (Y) traversing said bent portion.

4. The braking device as claimed in any of claims 1 to 3, wherein the guide member (40) is disposed between the first part (18a) and the second part (18b) of the support (18).

5. The braking device as claimed in any of claims 1 to 4, wherein the brake lever (26) is brought close to the guide member (40) when the pivoting body (24) is brought from the rest position into the actuated position.

6. The braking device as claimed in any of claims 1 to 5, wherein the guide axis (Z) of the guide member (40) extends transversally to said plane (P1) passing through the axis of pivot (Y) and through the longitudinal axis (X) of said attaching element (20).

7. The braking device as claimed in any of claims 1 to 6, wherein the guide member (40) and the axis of pivot (Y) are disposed on either side of a plane (P2) perpendicular to the guide axis (Z) and passing through the longitudinal axis (X) of said attaching element (20).

8. The braking device as claimed in any of claims 1 to 7, wherein the guide member (40) and the attaching element (20) extend on one and the same side of a plane (P3) passing through the axis of pivot (Y) and through the brake lever (26).

9. The braking device as claimed in any of claims 1 to 8, wherein the second portion (24b) of the pivoting body (24) comprises an outer surface (28), the receiving area (30) comprising a cavity (32) fashioned in said outer surface and configured to receive the attaching part (Ca) of the brake cable (C).

10. The braking device as claimed in claim 9, wherein said cavity (32) comprises a contact surface (32a) on which said attaching part (Ca) of the brake cable (C) bears, said contact surface extending substantially perpendicular to the guide axis (Z) when the pivoting body (24) is in the rest position.

11. The braking device as claimed in claim 9 or 10, wherein a groove (34) is fashioned in said outer surface (28) of the second portion (24b) of the pivoting body (24), said groove opening into said cavity (32) and being configured to receive at least a portion of the brake cable (C) located between the guide member (40) and the attaching part (Ca) of the brake cable.

12. The braking device as claimed in any of claims 1 to 11, wherein the pivoting body (24) comprises a circular support portion (36) configured to support the brake cable (C) when said pivoting body is brought into the actuated position, said circular support portion substantially defining a portion of circle (C1) centered on the axis of pivot (Y), the guide member (40) being configured so that the guide axis (Z) remains substantially tangent to said circle portion when said pivoting body is brought from said at least one rest position into the actuated position, and conversely.

13. The braking device as claimed in claims 11 and 12, wherein said groove (34) comprises a back wall (36) defining said circular support portion (36).

14. The braking device as claimed in any of claims 1 to 13, wherein the second part of the support (18) comprises a first wing (19) and a second wing (21) extending substantially parallel to the first wing, said pivoting body (24) extending at least in part between the first wing and the second wing when the pivoting body is in the rest position.

15. The braking device as claimed in claim 14, wherein the receiving area (30) extends between the first wing (19) and the second wing (21) when the pivoting body (24) is in the rest position.

16. The braking device as claimed in any of claims 1 to 15, further comprising a return element arranged in such a way as to bring the pivoting body (24) into the rest position when the brake lever (26) is not actuated, and wherein the support (18) comprises at least one stop portion (23) and wherein the pivoting body comprises at least one shoulder (25) configured to abut on said stop portion, when said pivoting body is brought into the rest position.

17. A wheeled vehicle (100) having at least one wheel (110) attached to a frame (120) comprising a handlebar (12) and at least one brake (130) associated with said wheel and actuatable by a brake cable (C) having an attaching part (Ca), said vehicle further comprising a braking device (10) as claimed in any of claims 1 to 16, the receiving area (30) of the braking device receiving the attaching part of the brake cable, said braking device being attached to the handlebar by means of said attaching element (20), the braking device being configured to exert a traction force on the brake cable, when the pivoting body (24) is brought into the actuated position, in order to brake said wheel.

18. The vehicle as claimed in claim 17, wherein said guide member (40) extends below said plane (P1) passing through the axis of pivot (Y) and through the longitudinal axis (X) of said attaching element (20).
